# EUROPÄISCHE PATENTSCHRIFT

(11) **EP 0 323 407 B1**
(45) Veröffentlichungstag und Bekanntmachung des Hinweises auf die Patenterteilung: **01.03.1995**
(21) Anmeldenummer: 88810879.2
(22) Anmeldetag: 20.12.1988
(51) Int. Cl.: C09B 67/02, D06L 3/12, D06M 16/00, C11D 3/395, C09B 67/08

(54) **Umhüllte Wirksubstanzen**
Enrobed processing materials
Substance active enrobée

(30) Priorität: 29.12.1987 CH 5092/87
(43) Veröffentlichungstag der Anmeldung: 05.07.1989
(73) Patentinhaber: CIBA-GEIGY AG, 4002 Basel (CH)
(72) Erfinder: Bruttel, Beat, Dr., CH-4461 Böckten (CH); Kvita, Petr, Dr., CH-4153 Reinach (CH)

(56) Entgegenhaltungen:
- EP-A- 0 014 503
- EP-A- 0 034 771
- DE-A- 1 134 467
- DE-A- 2 844 710
- GB-A- 2 158 084

## Beschreibung

Die Anmeldung betrifft ein Verfahren zur Herstellung von umhüllten Farbstoffen, wobei die Farbstoffe gegebenenfalls in Kombination mit Coupagemitteln, Dispergiermitteln, Puffern, Stabilisatoren und/oder weiteren Hilfsmitteln vorliegen.

Aus der GB-A 2 158 084 ist ein Verfahren zur Herstellung von Farbstoffgranulaten bekannt, worin man die wässrige, ein Polyäthylenglykol enthaltende Lösung oder Suspension eines Farbstoffs im Sprühtrockner oder Wirbelbetttrockner trocknet. Es wurde nun gefunden, dass man besonders abriebfeste, rieselfähige, staubarme und gut dosierbare Handelsformen erhält, wenn man das in einem ersten Schritt mittels eines beliebigen Verfahrens hergestellte Farbstoffgranulat in einem separatem Folgeschritt mit einem geeigneten Überzugsmaterial umhüllt.

Gegenstand der Anmeldung ist somit ein Verfahren zur Herstellung voll umhüllten Granulaten von wasserlöslichen Farbstoffen, welches dadurch gekennzeichnet ist, dass man einen Farbstoff oder ein Farbstoffgemisch in einem ersten Schritt granuliert und das erhaltene Granulat in einem zweiten Schritt mit einem geschmolzenen Überzugsmaterial, das einen Schmelzpunkt von über 40 bis 130°C aufweist, umhüllt.

Bei den wasserlöslichen Farbstoffen handelt es sich zum Beispiel um anionische und kationische Farbstoffe, wie, Chromierungs-, Entwicklungs- und Beizenfarbstoffe sowie vor allem um Metallkomplex- und Reaktivfarbstoffe. Es handelt sich insbesondere um sulfonsäure- bzw. carbonsäuregruppenhaltige metallfreie oder metallhaltige und metallisierbare Mono-, Dis- und Polyazofarbstoffe, Pyrazolon-, Thioxanthon-, Oxazin-, Stilben-, Formazanfarbstoffe, Anthrachinon-, Nitro-, Methin-, Triphenylmethan-, Xanthon-, Naphthazarin, Styryl-, Azastyryl-, Naphthoperinon-, Chinophthalon- und Phthalocyaninfarbstoffe, sowie um solche Farbstoffe, die mindestens einen faserreaktiven Rest im Farbstoffmolekül aufweisen.

Bei den anionischen Farbstoffen handelt es sich insbesondere um die Alkalisalze oder Ammoniumsalze der sogenannten sauren Wollfarbstoffe, der Reaktivfarbstoffe oder der substantiven Baumwollfarbstoffe der Azo-, Anthrachinon- und Phthalocyaninreihe. Als Azofarbstoffe kommen z.B. metallhaltige oder metallfreie Mono-und Disazofarbstoffe sowie Formazanfarbstoffe, die eine oder mehrere Sulfonsäuregruppen enthalten, in Betracht. Als Anthrachinonfarbstoffe sind insbesondere 1-Amino-4-aryl-amino-anthrachinon-sulfonsauren zu erwähnen.

Als Metallkomplexfarbstoffe kommen vorzugsweise sulfonsäure- bzw. carbonsäuregruppenhaltige Metallkomplexfarbstoffe, beispielsweise 1:1 oder 1:2 Metallkomplexe von Azo- oder Azomethinfarbstoffen oder metallisierte Phthalocyanine, insbesondere Kupfer-und Nickelphthalocyanine, in Betracht. Bei den 1:1 und 1:2-Metallkomplexen handelt es sich vorzugsweise um 1:1-Nickelkomplexe, 1:1-Kobaltkomplexe, 1:1-Kupferkomplexe, 1:1-Chromkomplexe, 1:1-Eisenkomplexe oder um symmetrische oder asymmetrische 1:2-Kobaltkomplexe, 1:2-Eisenkomplexe oder 1:2-Chromkomplexe von insbesondere o-Carboxy-o'-hydroxy, o-Hydroxy-o'-amino- oder o,o'-Dihydroxyazofarbstoffen des Benzol-azo-benzol-, Naphthalin-azo-naphthalin-, Benzol-azo-naphthalin-, Benzol-azo-pyrazolon, Benzol-azo-pyridon-oder Benzol-azo-acetessigsäureamid-Typs, wobei diese Gruppierungen unsubstituiert oder auch substituiert sein können. Als Substituenten kommen z.B. in Betracht: gegebenenfalls substituierte Sulfonsäureamide oder Sulfone, Halogen oder Nitro.

Die erfindungsgemäss verwendbaren Kupfer- und Nickelphthalocyanine leiten sich von den üblichen Gemischen verschiedener Sulfonierungsgrade ab und enthalten vorzugsweise 2 bis 3 oder auch 4 sulfatierte Sulfonsäure-β- oder -γ-hydroxyalkylamidgruppen, können daneben aber auch einzelne Halogene und einzelne Sulfonsäureamidgruppen enthalten, wobei diese Sulfonsäureamidgruppen am Stickstoff unsubstituiert oder substituiert sein können, beispielsweise durch nieder Alkyl, wie Methyl, Aethyl, Propyl, Butyl, oder niedere Hydroxyalkylgruppen, wie 2-Hydroxyäthyl, 2-Hydroxypropyl, 3-Hydroxypropyl.

Die sulfonsäuregruppenhaltigen Azofarbstoffe verwendet man vorteilhaft in Form ihrer Metallsalze, z.B. der Kalium-, Ammonium-, Lithium- oder vor allem Natriumsalze und die Salzgemische.

Als geeignete faserreaktive Gruppen enthalten die Reaktivfarbstoffe z.B. heterocyclische Gruppen oder eine Acylgruppe von einer Carbonsäure, wobei diese Gruppen mindestens ein unter Färbebedingungen abspaltbares Halogenatom aufweisen. Es handelt sich beispielsweise um die folgenden Gruppen: s-Triazinylreste, die am Triazinring ein oder zwei Halogenatome, wie Chlor-, Fluor- oder Bromatome tragen, Pyrimidylreste, die ein bis drei Halogenatome wie Chlor- und/oder Fluoratome bzw. eine oder zwei Arylsulfonyl- oder Alkansulfonylgruppen am Pyrimidinring tragen, Dichlorchinoxylinyl-, 2-Chlorbenzthiazolyl-, Chloracetylaminogruppen oder α,β-Dibrompropionylaminogruppen.

Beispiele für Faserreaktivgruppen der Vinylsulfon-Reihe sind neben der Vinylsulfonylgruppe selbst aliphatische Sulfongruppen, die in β-Stellung zur Sulfongruppe eine alkalisch eliminierbare Gruppe, wie ein Halogenatom oder einen Esterrest einer Säure, enthalten, wie beispielsweise die β-Chloräthylsulfonyl-, β-Acetoxyäthylsulfonyl-, β-(3-Sulfobenzoyloxy)-äthylsulfonyl-, β-Sulfatoäthylsulfonyl-, β-Thiosulfatoäthylsulfonyl-, β-Phosphatoäthylsulfonyl, β-Sulfatoäthylsulfonylmethylamino-, Vinylsulfonylmethylamino-, 4-Vinylsulfonylbutyryl-, 4-Chloräthylsulfonylbutyryl-, Vinylsulfonyläthoxyäthylamino- oder die 4-β-Sulfatoäthylsulfonylanilino-Gruppe.

Des weiteren kommen als faserreaktive Gruppen z.B. noch in Frage Halogencyclobutan-, Mono- oder Bis-(γ-Halogen-β-hydroxypropyl)-aminogruppen, β-Halogenäthylsulfamidreste, β-Halogenäthoxygruppen, β-Halogenäthylmercaptogruppen, γ-Halogen-β-hydroxy-propylsulfamidreste oder 2,3-Epoxypropylgruppen.

Bei den basischen Farbstoffen handelt es sich um die gebräuchlichen Salze und Metallhalogenid-, beispielsweise Zinkchlorid-Doppelsalze der bekannten kationischen Farbstoffe, insbesondere der Methin- bzw. Azamethinfarbstoffe, die z.B. einen Indolinium-, Pyrazolium-, Imidazolium-, Triazolium-, Tetrazolium-, Oxadiazolium-, Thiodiazolium-, Oxazolium-, Thiazolium-, Pyridinium-, Pyrimidinium-, Pyrazinium-Ring enthalten.

Die genannten Heterocyclen können gegebenenfalls substituiert und/oder mit aromatischen Ringen kondensiert sein. Ferner kommen auch kationische Farbstoffe der Diphenylmethan-, Triphenylmethan-, Oxazin-, Thiazin- und 1,2-Pyran-Reihe in Frage, sowie schliesslich auch Farbsalze der Arylazo- und Anthrachinonreihe.

Neben Einzelfarbstoffen können natürlich auch Farbstoffmischungen vorliegen.

Die erfindungsgemäss eingesetzten Farbstoffe sind bekannt und können nach bekannten Methoden hergestellt werden.

Die oben genannten Farbstoffe können ferner gegebenenfalls in Kombination mit Coupagemitteln, Dispergiermitteln, Puffern, Stabilisatoren und/oder weiteren Hilfsmitteln vorliegen. Als weitere Hilfsmittel werden beispielsweise Netzmittel, Löslichkeitsverbesserer, Textil-, Färberei- und Applikationshilfsmittel sowie schaumdämpfende Mittel angesehen. All diese Mittel dürfen nicht mit den Farbstoffen in Wechselwirkung treten.

Bei dem Umhüllungsmaterial handelt es sich ebenfalls um die unterschiedlichsten Materialien oder Gemische wie z.B. wasserlösliche Tenside Kohlenhydrate, Polymere, Wachse, Fette, Paraffine und/oder gehärtete Oele gegebenenfalls in Kombination mit Bindemitteln, wasserunlöslichen Farbstoffen, Lösungsbeschleunigern und/oder schmelzpunktsenkenden Mitteln.

Im speziellen werden jedoch Umhüllungsmaterialien eingesetzt die einen Schmelzpunkt von >40°C besitzen und sich in Wasser bei Temperaturen von 10 bis 130°C schnell lösen, verteilen und/oder bei Temperaturen von >40° bis 130°C schmelzen.

Bevorzugte Umhüllungsmaterialien sind Polyethylenglykole, Polysaccharide, Glyceride insbesondere die Fettsäureester und Fettalkohole mit mehr als 18 Kohlenstoffatomen und einem Schmelzpunkt von über 40°C bis 100°C, insbesondere die geradzahligen aliphatischen Alkohole mit 16 - 36 Kohlenstoffatomen und die geradzahligen aliphatischen Säuren mit 24 - 36 Kohlenstoffatomen, feste Paraffine mit Schmelzpunkten von 40 bis 100°C wasserlösliche anionische, nichtionogene und amphotere Tenside, insbesondere solche, die wachsartig sind mit Schmelzpunkt von 40° bis 100°C, Bienenwachs, Cerate, Wollwachs, Lanolin, gehärtetes Erdnussöl oder Gemische dieser Substanzen. Die oben genannten Substanzen sind bekannt und werden z.B. in der US-3423489; R. Büttiker Chimia 31 (77) Nr. 8, 301; H. Sucker, Pharmazeutische Technologie, Georg Thieme Verlag Stuttgart 1978 und H. List, Arzneiformenlehre, Wissenschaftliche Verlagsgesellschaft Stuttgart 1985 beschrieben.

Von besonderem Interesse sind N-Alkylbetaine, Polyoxyethylenalkylaminoether, ethoxyliertes Stearyldiphenyloxyethyldiethylentriamin, höhere gesättigte und ungesättigte Fettsäuren (z.B. Stearinsäure, Oleinsäure) und deren Natrium und Kaliumsalze, Diglycerinester von höheren Fettsäuren (z.B. Glycerin-1,3-dipalmitat), Alkylarylethoxylate, Nonylphenoxypoly(ethylenoxy)ethanol, Blockcopolymere von Ethylenoxid-Propylenoxid sowie Propylenoxid-Ethylenoxid, gesättigte und ungesättigte Fettalkoholethoxylate, vorzugsweise lineare C₁₆-C₁₈-Fettalkoholethoxylate, Alkylphenolethoxylate, Blockpolymere erhalten durch Polykondensation von Propylenoxid und Ethylenoxid mit Ethylendiamin, ethoxylierte Fettalkoholpolyglykolether mit ≧10 Mol Ethylenoxid, Polyethylenglykole mit Molekulargewichten >2700 oder Gemische der oben genannten Substanzen untereinander.

Desweiteren kann das Umhüllungsmaterial gegebenenfalls noch wasserunlösliche Farbstoffe, schmelzpunktsenkende Mittel und/oder Lösungsbeschleuniger wie z.B. Hydroxypropylmethylcellulose, Hydroxypropylcellulose, Stärke, Carboxymethylstärke, Alginate z.B. Natriumalginat und Galaktomannan enthalten.

Besonders vorteilhaft ist es, wenn man als Umhüllungsmaterial solche Substanzen verwendet, die ausserdem noch weitere gewünschte Wirkungen wie zum Beispiel als Dispergier-, Textil-, Färberei- oder Applikationshilfsmittel zeigen. Die Substanzen brauchen dann gegebenenfalls der Wirksubstanz vor der Umhüllung bzw. zum Beispiel dem Färbebad nicht mehr zugemischt werden.

Die Dicke der den Farbstoff oder die Farbstoffmischung umhüllenden Schicht beträgt 0,002 mm bis 3 mm vorzugsweise 0,02 mm bis 2 mm wobei die Menge an Umhüllungsmaterial vorzugsweise ≦ der Menge an Farbstoff oder Farbstoffmischung ist und die gesamte Schicht sich auch aus mehreren Einzelschichten mit verschiedenen Umhüllungsmaterialien zusammensetzen kann.

Bei dem erfindungsgemässen Verfahren handelt es sich vorzugsweise um ein mehrstufiges Verfahren. Im ersten Schritt wird die Synthese-Lösung oder -Suspension oder die bei der Synthese z.B. in Form eines Feststoffs oder angeteigten Filterkuchens anfallende Wirksubstanz oder die gereinigte, fertig formulierte und/oder homogenisierte Wirksubstanz oder Wirksubstanzmischung einem Granulierverfahren z.B. einer Schmelz-, Sprüh-, Wirbelbett-, Extrudier-, Strangpress-, Bandpress-, Koazervat-, Walzenpress-, Aufbau-, Teller-, Zertropf-, Schuppierkühlband-, Roll-, Turbinengenerator- und/oder Lochscheibengranulierung unterzogen. Gegebenenfalls wird das so erhaltene Rohgranulat daran anschliessend homogenisiert, kompaktiert, umgeformt vorzugsweise z.B. in einem Marumerizer® abgerundet. Der Feinanteil mit einer Korngrösse von <80 »m wird abgetrennt und gegebenenfalls in das Granulier-Verfahren zurückgeführt.

Im zweiten Schritt erfolgt dann die Umhüllung der Wirksubstanz oder Wirksubstanzmischung mit einer geeigneten Umhüllungseinrichtung wie z.B. einer aus der Pharma- oder Biotechnologie bekannten Apparatur. Diese Umhüllungsapparatur und die zu wählende Umhüllungstechnik wird dabei bestimmt durch das verwendete Umhüllungsmaterial. Zur Umhüllung werden vorzugsweise Granulate mit einer Korngrösse von 80-2000 »m insbesondere 200-700 »m verwendet. Die Umhüllung erfolgt z.B. in einem Wirbel- bzw. Fliessbett mit nachgeschaltetem Kühler und/oder Trockner in einer Kesseldragieranlage mit Dragierkesseln und Poliertrommeln der unterschiedlichsten Formen und mit manuellem oder automatischem Aufgiessen oder Aufsprühen der geschmolzenen Ueberzugsmaterialien zum Beispiel nach dem Warmdragier- oder Kaltdragierverfahren [Heinz, Sucher, Pharmazeutische Technologie, Georg Thieme Verlag Stuttgart 1978, S. 425ff.]. Die Dicke der die Farbstoffgranulate umhüllenden Schicht beträgt 0,002 mm bis 3 mm, wobei die Menge an Umhüllungsmaterial ≦ der Menge an Farbstoff oder Farbstoffmischung ist. Vorteilhafterweise wird der zweite Schritt mit einer Klassierung kombiniert, bei der das nach der Umhüllung gegebenenfalls entstehende Ober- oder Grob- und Feinkorn von der Fraktion mit den Korngrössen von 80 bis 2000 »m abgetrennt wird.

Die nach dem erfindungsgemässen Verfahren erhaltenen umhüllten Farbstoffe bzw. Farbstoffmischungen sind abriebfest, rieselfähig, staubarm und gut dosierbar.

Die nachfolgenden Beispiele erläutern die Erfindung. Prozente und Teile bedeuten Gewichtsprozente bzw. -teile.

Beispiel 1: 7 kg des Anthrachinonfarbstoffs C.I. Acid Blue 239, 2 kg Dispergator der Formel 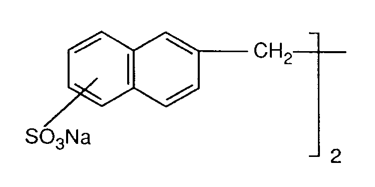
und
1 kg Dextrin werden in einem Lödige-Mischer vermischt und anschliessend in einer Stiftmühle gemahlen. Der gemahlene, coupierte Farbstoff wird mittels eines Rollkompaktierers mit Profilwalzen gepresst. Die resultierenden Granulate werden nach einer Abrundung im Marumerizer® zwecks Abtrennung des Gutkorns mit einer Grösse von 100 »m - 2000 »m vom Fein- (Korngrösse < 100 »m) und Grobanteil (Korngrösse > 2000 »m) gesiebt. Anschliessend wird das Gutkorn in einen mit einer Sprühdüse und Mantel ausgerüsteten V-Mischer eingetragen und das Granulat auf 45 °C erwärmt. Dann wird das Granulat unter stetigem Mischen mit 10 % (bezogen auf das Gewicht des zu beschichtenden Farbstoffgranulats) geschmolzenem Färberei-Hilfsmittel aus ethoxyliertem Stearyldiphenyloxyethyl-diethylentriamin besprüht. Nach dem Abschluss des Beschichtungsvorgangs wird das beschichtete Farbstoffgranulat in ein Fliessbett ausgetragen, wo es mittels kalter Luft abgekühlt wird.

Letztlich wird durch Siebung die Gutkornfraktion mit der Korngrösse von 100 »m - 2000 »m abgetrennt.

Beispiel 2: Aus 15 kg des Düsengranulates des Farbstoffes Acid Red 361 wird das Feinkorn durch Siebung entfernt. Das Gutkorn mit der Korngrösse >100 »m, wird einem Wirbelbett kontinuierlich zugeführt. In dem Wirbelbett wird das Granulat mit einer auf 60°C erwärmten Schmelze des durch Polykondensation von Propylenoxyd und Ethylenoxyd mit Ethylendiamin erhaltenen Blockcopolymers (MG ca. 12000) unter gleichzeitiger Zuführung von auf 55°C erwärmter Luft besprüht (total 5 Gew.% Umhüllungshilfsmittel bezogen auf das Kernmaterial). Das umhüllte Granulat wird kontinuierlich in einen Kühler ausgetragen. Aus dem umhüllten Granulat wird anschliessend die gewünschte Kornfraktion (Korngrösse 100 - 800 »m) durch Siebung abgetrennt. Man erhält auf diese Weise ein staubarmes, fliessfähiges Granulat, das über mehrere Monate lagerstabil ist.

Beispiel 3: Aus dem in einem Aufbaugranulator hergestellten Granulat des Monoazofarbstoffes Reactive Orange 29 wird die Fraktion der Korngrösse 400 - 1500 »m durch Siebung abgetrennt und 10 kg dieses Granulats in einen mit Mantel ausgerüsteten Pflugscharmischer eingetragen. Das Granulat wird nach einer Erwärmung auf 50°C unter stetig langsamem Mischen mit einer auf 62°C erwärmten Schmelze, bestehend aus 20 Gew.% des ethoxylierten Stearyldiphenyloxyethyldiethylentriamin und 80 Gew.% eines Polyethylenglykols (MG ∼4500) besprüht. Insgesamt wird das Granulat mit 3,5 Gew.% des Hilfsmittels beschichtet (bezogen auf Kernmaterial). Nach der Beschichtung wird das warme Granulat kontinuierlich in einen Kühler ausgetragen. Das fertige Granulat ist staubarm und lässt sich gut in einer Färbeflotte lösen.

## Patentansprüche

1. Verfahren zur Herstellung von umhüllten Granulaten von wasserlöslichen Farbstoffen, dadurch gekennzeichnet, dass man einen Farbstoff oder ein Farbstoffgemisch in einem ersten Schritt granuliert und das erhaltene Granulat in einem zweiten Schritt mit einem geschmolzenen Ueberzugsmaterial, das einen Schmelzpunkt von über 40 bis 130°C aufweist, umhüllt.

2. Verfahren gemäss Anspruch 1, dadurch gekennzeichnet, dass es sich bei dem Farbstoff oder dem Farbstoffgemisch um einen oder mehrere anionische oder kationische Metallkomplex-, Reaktiv-, Chromierungs-, Entwicklungs- oder Beizenfarbstoffe oder um eine Mischung davon handelt.

3. Verfahren gemäss Anspruch 2, dadurch gekennzeichnet, dass es sich bei dem Farbstoff oder dem Farbstoffgemisch um einen oder mehrere sulfonsäure- bzw. carbonsäuregruppenhaltige metallfreie oder metallhaltige und metallisierbare Mono-, Dis- oder Polyazofarbstoffe, Pyrazolon-, Thioxanthon-, Oxazin-, Stilben-, Formazanfarbstoffe, Anthrachinon-, Nitro-, Methin-, Triphenylmethan-, Xanthon-, Naphthazarin-, Styryl-, Azastyryl-, Naphthoperinon-, Chinophthalon- oder Phthalocyaninfarbstoffe oder um solche Farbstoffe, die mindestens einen faserreaktiven Rest im Farbstoffmolekül aufweisen, handelt.

4. Verfahren gemäss einem der Ansprüche 1 bis 3, dadurch gekennzeichnet, dass es sich bei dem Farbstoff oder dem Farbstoffgemisch um einen oder mehrere Farbstoffe handelt, die mindestens einen faserreaktiven Rest im Farbstoffmolekül aufweisen.

5. Verfahren gemäss einem der Ansprüche 1 bis 4, dadurch gekennzeichnet, dass sich das Ueberzugsmaterial in Wasser bei einer Temperatur von 10 bis 130°C schnell löst und/oder verteilt.

6. Verfahren gemäss einem der Ansprüche 1 bis 5, dadurch gekennzeichnet, dass man das Granulat mit einem wasserlöslichen Tensid, Kohlenhydrat, Polymer, Wachs, Fett, Paraffin und/oder gehärteten Oel als Ueberzugsmaterial umhüllt.

7. Verfahren gemäss einem der Ansprüche 1 bis 5, dadurch gekennzeichnet, dass man das Granulat mit einem Polyethylenglykol, Polysaccharid, Glycerid, festen Paraffin, wasserlöslichen anionischen, nichtionogenen und amphoteren Tensid, Bienenwachs, Cerat, Wollwachs, Lanolin, gehärteten Erdnussöl oder mit einem Gemisch dieser Substanzen als Ueberzugsmaterial umhüllt.

8. Verfahren gemäss einem der Ansprüche 1 bis 5, dadurch gekennzeichnet, dass man das Granulat mit einem N-Alkylbetain, Polyoxyethylenalkylaminoether, ethoxylierten Stearyldiphenyloxyethyldiethylentriamin, höheren gesättigten oder ungesättigten Fettsäure oder deren Natrium- oder Kaliumsalz, Diglycerinester von einer höheren Fettsäure, Alkylarylethoxylat, Nonylphenoxypoly(ethylenoxy)-ethanol, Blockcopolymer von Ethylenoxid-Propylenoxid sowie Propylenoxid-Ethylenoxid, gesättigten oder ungesättigten Fettalkoholethoxylat, Alkylphenolethoxylate, Blockpolymer erhalten durch Polykondensation von Propylenoxid und Ethylenoxid mit Ethylendiamin, ethoxylierten Fettalkoholpolyglykolether mit ≧10 Mol Ethylenoxid, Polyethylenglykol mit einem Molekulargewicht > 2700, oder mit einem Gemisch davon als Ueberzugsmaterial umhüllt.

9. Verfahren gemäss einem der Ansprüche 1 bis 8, dadurch gekennzeichnet, dass man das Granulat mit einem Ethylenoxid-Propylenoxid-Blockcopolymer oder einem ethoxylierten Stearyldiphenyloxyethyl-diethylentriamin als Ueberzugsmaterial umhüllt.

10. Verfahren gemäss einem der Ansprüche 1 bis 8, dadurch gekennzeichnet, dass man das Granulat mit einem Polyethylenglykol mit einem Molekulargewicht > 2700 als Ueberzugsmaterial umhüllt.

11. Verfahren gemäss einem der Ansprüche 1 bis 10, dadurch gekennzeichnet, dass die umhüllende Schicht eine Dicke von 0,002 mm bis 3 mm hat und die Menge an Umhüllungsmaterial ≦ der Menge Farbstoff oder Farbstoffmischung ist.

12. Verfahren gemäss einem der Ansprüche 1 bis 11, dadurch gekennzeichnet, dass man Granulate einer Korngrösse von 80 bis 2000 »m umhüllt.

## Claims

1. A process for the preparation of coated granules of water-soluble dyes, which comprises granulating a dye or a mixture of dyes in a first step and coating the resulting granules, in a second step, with a melted coating material which has a melting point of from more than 40 to 130°C.

2. A process according to claim 1, wherein the dye or the mixture of dyes comprises one or more anionic or cationic metal complex, reactive, chrome, developing or mordant dyes or a mixture thereof.

3. A process according to claim 2, wherein the dye or the mixture of dyes comprises one or more sulfo- or carbonyl-containing non-metallised or metallised and metallisable monoazo, disazo or polyazo dyes, pyrazolone, thioxanthone, oxazine, stilbene or formazan dyes, anthraquinone, nitro, methine, triphenylmethane, xanthone, naphthazarine, styryl, azastyryl, naphthoperinone, quinophthalone or phthalocyanine dyes, or those dyes which contain at least one fibre-reactive radical in the dye molecule.

4. A process according to one of claims 1 to 3, wherein the dye or the mixture of dyes comprises one or more dyes which contain at least one fibre-reactive radical in the dye molecule.

5. A process according to one of claims 1 to 4, wherein the coating material dissolves and/or disperses rapidly in water at a temperature of from 10 to 130°C.

6. A process according to one of claims 1 to 5, wherein the granules are coated with a water-soluble surfactant, carbohydrate, polymer, wax, fat, paraffin and/or hardened oil as coating material.

7. A process according to one of claims 1 to 5, wherein the granules are coated with a polyethylene glycol, polysaccharide, glyceride, solid paraffin, water-soluble anionic, non-ionic and amphoteric surfactant, beeswax, cerate, wool wax, lanolin, hardened groundnut oil or a mixture of these substances as coating material.

8. A process according to one of claims 1 to 5, wherein the granules are coated with an N-alkylbetaine, polyoxyethylene alkylamino ether, ethoxylated stearyldiphenyloxyethyldiethylenetriamine, higher saturated or unsaturated fatty acid or the sodium or potassium salt thereof, diglycerol ester of a higher fatty acid, alkylaryl ethoxylate, nonylphenoxypoly(ethyleneoxy)ethanol, block copolymer of ethylene oxide/propylene oxide or propylene oxide/ethylene oxide, saturated or unsaturated fatty alcohol ethoxylate, alkylphenol ethoxylate, block polymer obtained by the polycondensation of propylene oxide and ethylene oxide with ethylenediamine, ethoxylated fatty alcohol polyglycol ether with ≧10 mol of ethylene oxide, polyethylene glycol having a molecular weight of >2700, or with a mixture thereof as coating material.

9. A process according to one of claims 1 to 8, which comprises coating the granules with an ethylene oxide propylene oxide block copolymer or with an ethoxylated stearyldiphenyloxyethyl diethylenetriamine as coating material.

10. A process according to one of claims 1 to 8, wherein the granules are coated with a polyethylene glycol having a molecular weight >2700 as coating material.

11. A process according to one of claims 1 to 10, wherein the coating layer has a thickness of from 0.002 mm to 3 mm, and the amount of coating material is less than or equal to the amount of dye or mixture of dyes.

12. A process according to one of claims 1 to 11, which comprises coating granules which have a particle size of from 80 to 2000 »m.

## Revendications

1. Procédé pour la préparation de granulés de colorants hydrosolubles enrobés, caractérisé en ce que l'on soumet, dans une première étape, un colorant ou un mélange de colorant à une granulation et en ce que l'on enrobe les granulés obtenus, dans une deuxième étape, avec une matière d'enrobage fondue ayant un point de fusion comprise entre plus de 40 °C et 130 °C.

2. Procédé conforme à la revendication 1, caractérisé en ce que le colorant ou mélange de colorant est ou contient un ou plusieurs des colorants suivants : les colorants formant des complexes avec des métaux, les colorants réactifs, les colorants de chromatage, les colorants de développement ou les colorants de mordançage, tous pouvant être anioniques ou cationiques.

3. Procédé conforme à la revendication 2, caractérisé en ce que le colorant ou le mélange de colorant est ou contient un ou plusieurs colorants mono-, di- ou polyazoïques portant des groupes acide sulfonique ou carboxylique, contenant ou non un métal ou pouvant être métallisés, colorants pyrazoloniques, thioxanthoniques, oxaziniques, stilbéniques, de type formazan, anthraquinoniques, nitrés, méthiniques, de type triphénylméthane, xanthoniques, naphtazariniques, styryliques, azastyryliques, naphtopérinoniques, chinophtalonique et les phtalocyanines, ainsi que de colorants comportant, dans la molécule, au moins un résidu réactif vis-à-vis des fibres.

4. Procédé conforme à une des revendications 1 à 3, caractérisé en ce que le colorant ou le mélange de colorant est ou contient un ou plusieurs colorants portant au moins un résidu réactif vis-à-vis des libres.

5. Procédé conforme à une des revendications 1 à 4, caractérisé en ce que la matière d'enrobage se dissout et/ou se disperse rapidement dans l'eau à une température comprise entre 10 et 130 °C.

6. Procédé conforme à une des revendications 1 à 5, caractérisé en ce que les granulés sont enrobés d'une matière d'enrobage qui est un agent tensio-actif hydrosoluble, un hydrocarbure, un polymère une cire, une graisse, une parrafine et/ou une huile hydrogénée.

7. Procédé conforme à une des revendications 1 à 5, caractérisé en ce que les granulés sont enrobés avec un polyéthylèneglycol, un polysaccharide, des glycérides, de la paraffine solide, des agents tensioactifs hydrosolubles anioniques, non ionogènes ou amphotères, de la cire d'abeille, des cérats, de la cire de laine, de la lanoline, de l'huile d'arachide hydrogénée ou un mélange de ces substances.

8. Procédé conforme à une des revendications 1 à 5, caractérisé en ce-que les granulés sont enrobés avec une N-alkylbétaïne, des alkylaminoéthers polyéthoxylés, la stéaryldiphényloxyéthyldiéthylènetriamine éthoxylée, des acides gras supérieurs saturés ou insaturés et leur sels de sodium et de potassium, des diglycérides d'acides gras supérieurs, des produits d'éthoxylation de composés alkylaryliques, le nonylphénoxypoly(éthylèneoxy)éthanol, des copolymères séquencés oxyde d'éthylène-oxyde de propylène ainsi qu'oxyde de propylène-oxyde d'éthylène, aux alcools gras saturés ou insaturés éthoxylés, des produits d'éthoxylation d'alkylphénols, des copolymères séquencés obtenus par polycondensation d'oxyde de propylène et d'oxyde d'éthylène avec l'éthylènediamine, des éthers éthoxylés de polyglycol et d'alcool gras avec ≧ 10 moles d'oxyde d'éthylène, des polyéthylèneglycols ayant des masses moléculaires supérieures à 2700 ou des mélanges des substances citées ci-dessus.

9. Procédé conforme à une des revendications 1 à 8, caractérisé en ce que les granulés sont enrobés avec un copolymère séquencé oxyde d'éthylène-oxyde de propylène ou avec une stéaryldiphényloxyéthyl-diéthylènetriamine éthoxylée.

10. Procédé conforme à une des revendications 1 à 8, caractérisé en ce que l'on enrobe les granulés avec un polyéthylèneglycol ayant une masse moléculaire supérieure à 2700.

11. Procédé conforme à une des revendications 1 à 8, caractérisé en ce que l'épaisseur de la couche de revêtement est comprise entre 0,002 et 3 mm et la quantité de matière d'enrobage est inférieure ou égale à la quantité de colorant ou de mélange de colorant.

12. Procédé conforme à une des revendications 1 à 11, caractérisé en ce que l'on enrobe des granulés ayant une taille de particules comprise entre 80 et 2000 »m.
